# EUROPEAN PATENT SPECIFICATION

(11) **EP 3 688 103 B1**
(45) Date of publication and mention of the grant of the patent: **26.08.2026**
(21) Application number: 18786545.6
(22) Date of filing: 25.09.2018
(51) Int. Cl.: C09D 1/00, C09D 5/00, C09D 5/08, C08G 77/58, C23C 18/12, C01B 33/145, C23C 18/04, C09D 7/61

(54) **ROOM TEMPERATURE CURE ZIRCONATE-SILICA SOL-GEL PRETREATMENT FOR METAL SUBSTRATES**
BEI RAUMTEMPERATUR HÄRTENDE ZIRKONAT-SILIZIUMDIOXID-SOLGEL-VORBEHANDLUNG FÜR METALLSUBSTRATE
PRÉTRAITEMENT SOL-GEL DE ZIRCONATE-SILICE DURCISSABLE À TEMPÉRATURE AMBIANTE POUR SUBSTRATS MÉTALLIQUES

(30) Priority: 25.09.2017 US 201762562720 P
(43) Date of publication of application: 05.08.2020
(73) Proprietor: The Sherwin-Williams Company, Cleveland, OH 44115 (US)
(72) Inventor: LI, Lei, Hudson OH 44236 (US)
(74) Representative: Novagraaf Group
(86) International application number: PCT/US2018/052568
(87) International publication number: WO 2019/060875

(56) References cited:
- JP-A- H0 971 438
- US-A1- 2003 024 432
- US-A1- 2013 095 317
- US-B1- 6 605 365

## Description

### BACKGROUND OF THE INVENTION

This application claims the benefit of U.S. provisional application number 62/562,720 filed on September 25, 2017.

This invention is directed to a sol-gel coating composition for use as a metal corrosion protective layer, and a coating system comprising a sol-gel coating thereof.

Colloids, which include gels, sols and emulsions, are usually defined as homogenous, non-crystalline disperse systems consisting of large molecules or ultramicroscopic particles of one substance dispersed through a second substance, with at least one characteristic dimension in the range of about 10⁻⁷ to 10⁻⁴ centimeters. The particles do not settle and cannot be separated out by ordinary filtering or centrifuging like those in a suspension. More particularly, in sol-gel technology, sols are dispersions of any solid in a liquid. Gels, are systems, such as common jelly, in which one component provides a sufficient structural framework for rigidity and other components from the space between the structural units or spaces. In a gel, the dispersed component and the dispersion medium both extend continuously throughout the system. The system has equilibrium-elastic (time-dependent) deformation and thus the shear modulus of rigidity enables gels to act like solids even though in most other physical respects they behave like liquids. Therefore, it is possible to produce from liquid components a solid, crosslinked material.

As in the case of conventional dispersions, a sol, e.g. the disperse phase, is relatively freely movable, this is no longer the case in a gel, where the particles are interconnected in net-like manner and are therefore difficult to displace relative to one another. Thus, the essence of sol-gel technology is the transition between free disperse and crosslinked dispersed phase. As a rule the transition from sol to gel in materials is irreversible, the dispersed, solid constituent being distributed in net or honeycomb-like manner in the dispersant, usually water, the dispersant being expelled by condensation in order to give a solid crosslinked material.

A frequent and major disadvantage of known coating systems based on sol-gel formulations is the presence of chloride and a high fraction of organic, generally volatile and also toxic solvents, which are obtained as a by product of the hydrolysis of the silanes or are added as diluents. The use of an amount of water insufficient for full hydrolysis of the silanes, and the utilization of acidic hydrolysis catalysts, allows sol-gel systems to be prepared which are stable on storage for months, but contain solvent. It is also known that increasing the amount of water leads to full hydrolysis of the alkoxy groups and hence to a drastic reduction in the storage stability of the systems, and/or to rapid formation of gel after the end of the hydrolysis process, more particularly when such systems are intended to have a very high solids content.

Another disadvantage of known coating systems based on sol-gel formulations for protecting metal surfaces includes the complex bath chemistry that is accompanied with a sol-gel coating, and the often required application of a multilayer system in order to have sufficient corrosion protection. Furthermore, an after treatment with relatively high temperatures (>150° C.) is required to provide a dense layer with satisfactory corrosion protection. In addition, it is very complicated to include additional functionalities to the sol-gel process and maintain sufficient corrosion protection. US 2003/024432 A1 describes an anti-corrosive gel that is a combination of an organometallic salt, an organosilane, and a borate, phosphate, or zinc functional component. US 6,605,365 describes an aqueous sol containing an alkoxyzirconium and an organosilane with an organic acid catalyst and zirconium stabilizer.

### DESCRIPTION OF THE DRAWINGS

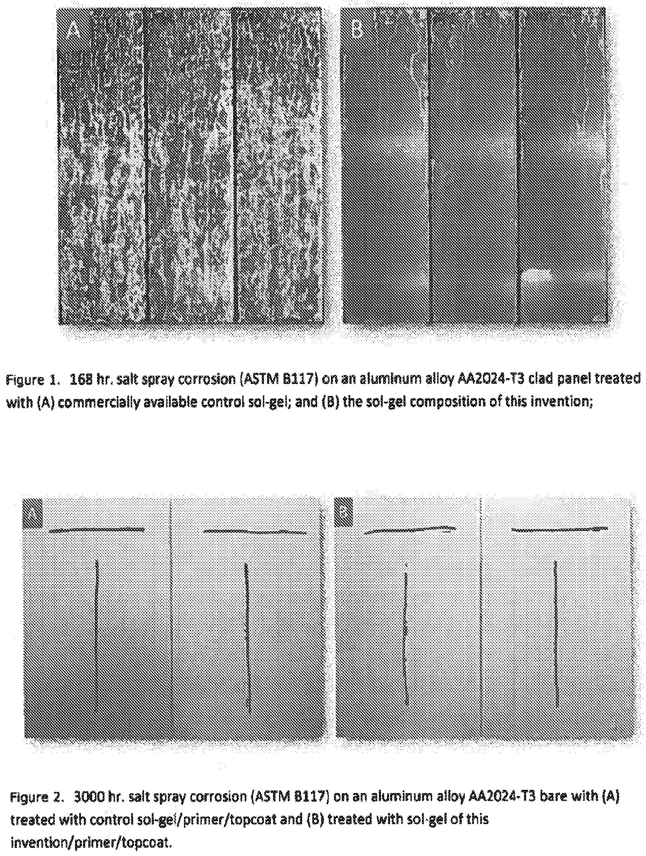

FIG. 1 illustrates 168 hr. salt spray corrosion (ASTM B117) on an aluminum alloy AA2024-T3 clad panel treated with (A) commercially available bench mark sol-gel; and (B) the sol-gel composition of this invention;
FIG. 2 illustrates 3000 hr. salt spray corrosion (ASTM B117) on an aluminum alloy AA2024-T3 bare with (A) treated with commercially available bench mark sol-gel/primer/topcoat and (B) treated with sol-gel of this invention/primer/topcoat;
FIG. 3 illustrates 1000 hr, 40°C, 80% RH filiform corrosion on an aluminum alloy AA2024-T3 bare with (A) treated with commercially available bench mark sol-gel/primer/topcoat and (B) treated with sol-gel of this invention/primer/topcoat;
FIG. 4 TEM image of the invented sol gel showing the zirconate silica nano particles

### SUMMARY OF THE INVENTION

According to a first aspect of the present invention there is provided a sol-gel composition comprising:
(a) a first part comprising at least one zirconium compound of the general formula:

   Zr(OC(O)R)₄

   wherein R represents an alkyl group of 1-6 carbon atoms; and a hydrated inorganic silica gel with particle size less than 50 nm; and
(b) a second part comprising an organosilane compound having the general formula: SiXₐ(OR)₄₋ₐ wherein R represents an alkyl group of 1-6 carbon atoms, X represents an alkyl glycidoxy group and ₐ represents an integer of 1-3.

The sol-gel is an organic-inorganic hybrid sol formed from at least one organic precursor and at least one inorganic precursor such that the organic and inorganic components are hybridized in the resulting coating structure. That is, the organic and inorganic components are chemically bonded together to create a fully hybridized organic-inorganic structure. Further stability of the hybrid sol-gel can be obtained with the addition of 2,4-pentanedione.

Another aspect of this invention is a metal substrate comprising a sol-gel composition chemically bonded to the substrate wherein the sol gel composition comprises:
(a) a first part comprising at least one zirconium compound of the general formula:

   Zr(OC(O)R)₄

   wherein R represents an alkyl group of 1-6 carbon atoms; and a hydrated inorganic silica gel with particle size less than 50 nm; and
(b) a second part comprising an organosilane compound having the general formula: SiXₐ(OR)₄₋ₐ wherein R represents an alkyl group of 1-6 carbon atoms, X represents an alkyl glycidoxy group and ₐ represents an integer of 1-3.

In one embodiment, the sol-gel coating composition has of dry film thickness of at least 50 nm, up to a range of 1 um.

According to another aspect of the present invention there is a two-part coating composition comprising: (a) a sol-gel composition as described above; and (b) a resin having acetoacetate and acrylate functionalities.

### DESCRIPTION OF THE INVENTION

It has been found, in accordance with this invention, that a sol-gel coating composition applied to a metal surface, preferably aluminum, aluminum alloys, or steel, including galvanized steel and stainless steel, can be better protected from corrosion by first applying a sol-gel coating material which comprises: (a) a first part comprising at least one zirconium compound of the general formula:

Zr(OC(O)R)₄

wherein R represents an alkyl group of 1-6 carbon atoms; and hydrated inorganic silica gel with particle size less than 50 nm; and
b) a second part comprising an organosilane compound having the general formula: SiXₐ(OR)₄₋ₐ wherein R represents an alkyl group of 1-6 carbon atoms, X represents an alkyl glycidoxy group and ₐ represents an integer of 1-3.

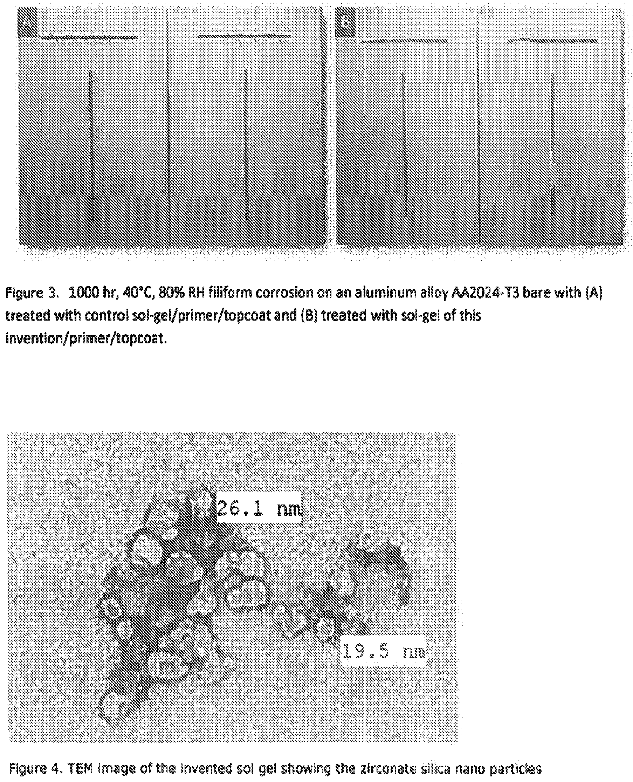

The first part of at least one zirconium compound can include compounds such as tetravalent zirconium acid esters, particularly zirconium tetraacetate, which is stable in water, and hydrated inorganic silica gel with particle size less than 50 nm (Figure 4.) The hydrated inorganic silica
gel with particle size less than 50 nm is critical to corrosion resistance. The first and second parts are mixed together and homogenized just prior to applying to the substrate. When the two parts combined and applied to the substrate, the zirconium compound, inorganic silica gel, and organic silane form chemically binds to the surface and adhering to the surface. The pH of the initial sol-gel is preferably between 3 and 6.

The thickness of the sol gel film is preferably 50 nm to 1 µm. Improved corrosion resistance of the sol gel coating can be achieved by using amino functional silane as the catalyst for the condensation of zirconate, silica gel, and epoxy silane to form dense network. The sol gel coating can then be subsequently topcoated with one or more films of topcoat, preferably but not exclusively, epoxy/amine, acetoacetate acrylic/acrylate, polyurethane, acrylic, polyester, melamine, or mixtures of thereof, as water-based or solvent based liquid systems or solvent-free powder coating systems. The sol gel curing can be achieved at room temperature without catalyst when directly topcoated with epoxy/amine coating. Applied to the sol-gel coat with particular preference is a topcoat based on one of the aforementioned organic resin systems.

As a result, the thin, inventive sol-gel coating of the metal surface it is possible, surprisingly, to achieve a further distinct improvement in the corrosion-inhibiting action of a surface coating system. Moreover, the adhesion of the topcoating system to the metal substrate is distinctly improved by the sol-gel coat. Even the sol-gel coat alone with film thickness of 100 nm shows an excellent anticorrosive action, which can be utilized as a form of temporary corrosion control on metal surfaces, as, for example, when primed metal substrates are in storage prior to final utilization or final coating.

The metal substrate comprises any metal and metal alloy and particularly those used for the automotive, aerospace and aviation industries. In particular, the metal substrate may comprise any one or a combination of the following: aluminium; aluminium alloy; magnesium; magnesium alloy; steel; stainless steel; zinc or zinc alloy or titanium or titanium alloy. The coating is also suitable to coat other substrates exposed to weathering corrosion.

### EXAMPLES

### EXAMPLE 1

### Preparation of Hybrid Sol-Gel:

Allow alkoxy zirconate to be stabilized with either carboxylic acids or 2,4-pentanedione in IPA. The stabilized zirconate is then fully hydrolyzed by adding excess amount of water. This zirconium sol-gel formed will then be added with agitation tetraalkyl silicate as the source inorganic silica gel. The zirconium silica hybrid sol-gel is formed after silicate is fully hydrolyzed and formed nano particles via partial condensation. Allow epoxy functional silane to hydrolyze in the sol-gel before application

Aluminum alloy AA2024-T3 (clad and/or bare) panels were wet sanded for deoxidation. The panels were then rinsed with clean DI water and wiped to dry using acetone. The panels were then spray in sequence with sol-gel pretreatment, epoxy/amine primer and/or acetoacetate acrylic/acrylate basecoat, and urethane topcoat. The pretreatment could be coated with the basecoat after 3 hours room temperature dry.

For comparison, one commercially available pre-treatment sol-gel coating ("Boegel" by 3M) and 12 different sol-gel samples were utilized for comparative analysis.

### RESULTS

Panels were prepared in triplicates for testing purposes. System consisted of a benchmark Boegel pretreatment, Sol-gel (control process) pretreatment, or 12 variations of pretreatment based on the control process of Sol-Gel, epoxy/amine primer and/or acetoacetate acrylic/acrylate basecoat, and urethane topcoat. Panels were cured for 2 weeks prior to testing. Panels were tested for 3000 hour salt spray exposure, 1000 hour filiform exposure, and 30 day Skydrol resistance.

### Skydrol Results

Panels had edges taped and a 1-inch scribe mark made on the panel. Half of the panel with the scribe was immersed in Skydrol solution for 30 days. Panels were then removed from the Skydrol solution and cleaned with IPA to remove the Skydrol oil. Panels were then inspected for blisters or defects at and around the scribe mark. Panels were then tested for hardness on a scratch tester. A 1200 gram weight was used while a needle is pulled along the coating of the panel.

All panels passed Skydrol testing. The scratch test penetrated the topcoat on all panels, but did not penetrate the primer.

### 1000 hr. Filiform Results

Edges and back of the panels were taped for filiform exposure. A broken T scribe was etched into the panel penetrating into the substrate. Panels were then exposed to HCl vapors face down for 1 hour at ambient temperature. Panels were removed from the acid vapor exposure and stood in open air for 15 minutes. The panels were then placed in a thermotron set at 40°C and 82% relative humidity in a vertical position for 1000 hours. Panels were then removed from the Thermotron and filiform readings were taken.

This invented sol gel showed better corrosion resistance with smaller blisters than the current commercially available benchmark.

### 3000 hr Salt Spray Results

Salt spray performance results utilizing AMS3095A certification testing was determined. The edge and back of the panels were taped for salt spray exposure. A broken T scribe was etched into the panel penetrating into the substrate. Panels were then exposed to 3000 hours of salt spray conditions. Panels are rated with a maximum blister size on the horizontal and vertical scribe. No blister can be larger than 3 mm in size. All panels passed according to the AMS3095A specification. The maximum allowed blister size is 3 mm. All panels passed with readings under 2 mm. This invented sol gel showed better corrosion resistance with much shorter creepage than the current commercially available benchmark.

## Claims

1. A stable zirconium-silica hybrid sol-gel composition, the composition comprising:
(a) at least one zirconium compound of the general formula:
Zr(OC(O)R)4
wherein R represents an alkyl group of 1-6 carbon atoms; and
(b) a hydrated inorganic silica gel with particle size less than 50 nm.

2. The sol-gel composition of claim 1, further comprising 2,4-pentanedione.

3. A two-part sol-gel composition, comprising:
(a) a first part comprising at least one zirconium compound of the general formula:
Zr(OC(O)R)4
wherein R represents an alkyl group of 1-6 carbon atoms; and a hydrated silica gel with particle size less than 50 nm; and
(b) a second part comprising an organosilane compound having the general formula: SiXa(OR)4-a wherein R represents an alkyl group of 1-6 carbon atoms, X represents an alkyl glycidoxy group and a represents an integer of 1-3.

4. The two-part sol-gel composition of claim 3, wherein the first part further comprises 2,4-pentanedione.

5. A coating composition comprising:
(a) the sol-gel composition of claim 3 or 4; and
(b) at least one silyl compound having the general formula:
SiXa(OR)4-a
wherein R represents an alkyl group of 1-6 carbon atoms, X represents an alkyl amine group and a represents an integer of 1-3.

6. The coating composition of claim 5, wherein the silyl compound is an aminosilane.

7. The coating composition of claim 5, wherein the silyl compound is a bis-silylamine.

8. A coating system comprising:
(a) a sol-gel coating of the composition of claim 5; and
(b) a primer resin layer over the sol-gel composition having epoxy and amine functionalities.

9. The coating system of claim 8, further comprising a urethane topcoat over the primer resin layer.

10. A coating system comprising:
(a) a sol-gel coating of the composition of claim 5; and
(b) a primer resin layer having acetoacetate and acrylate functionalities.

11. The coating system of claim 10, further comprising an urethane topcoat.

## Patentansprüche

1. Stabile Zirconium-Silica-Hybrid-Sol-Gel-Zusammensetzung, die Zusammensetzung umfassend:
(a) mindestens eine Zirconiumverbindung der allgemeinen Formel:
Zr(OC(O)R)4
wobei R eine Alkylgruppe mit 1-6 Kohlenstoffatomen darstellt; und
(b) ein hydratisiertes anorganisches Silicagel mit einer Teilchengröße von weniger als 50 nm.

2. Sol-Gel-Zusammensetzung nach Anspruch 1, ferner umfassend 2,4-Pentandion.

3. Zweiteilige Sol-Gel-Zusammensetzung, umfassend:
(a) einen ersten Teil, umfassend mindestens eine Zirconiumverbindung der allgemeinen Formel:
Zr(OC(O)R)4
wobei R eine Alkylgruppe mit 1-6 Kohlenstoffatomen darstellt; und ein hydratisiertes Silicagel mit einer Teilchengröße von weniger als 50 nm; und
(b) einen zweiten Teil, umfassend eine Organosilanverbindung, die die allgemeine Formel aufweist: SiXa(OR)4-a, wobei R eine Alkylgruppe mit 1-6 Kohlenstoffatomen darstellt, X eine Alkylglycidoxygruppe darstellt und a eine ganze Zahl von 1-3 darstellt.

4. Zweiteilige Sol-Gel-Zusammensetzung nach Anspruch 3, wobei der erste Teil ferner 2,4-Pentandion umfasst.

5. Beschichtungszusammensetzung, umfassend:
(a) die Sol-Gel-Zusammensetzung nach Anspruch 3 oder 4; und
(b) mindestens eine Silylverbindung, die die allgemeine Formel aufweist:
SiXa(OR)4-a
wobei R eine Alkylgruppe mit 1-6 Kohlenstoffatomen darstellt, X eine Alkylamingruppe darstellt und a eine ganze Zahl von 1-3 darstellt.

6. Beschichtungszusammensetzung nach Anspruch 5, wobei die Silylverbindung ein Aminosilan ist.

7. Beschichtungszusammensetzung nach Anspruch 5, wobei die Silylverbindung ein Bis-Silylamin ist.

8. Beschichtungssystem, umfassend:
(a) eine Sol-Gel-Beschichtung der Zusammensetzung nach Anspruch 5; und
(b) eine Primer-Harzschicht über der Sol-Gel-Zusammensetzung, die Epoxidund Aminfunktionalitäten aufweist.

9. Beschichtungssystem nach Anspruch 8, ferner umfassend eine Urethan-Deckschicht über der Primer-Harzschicht.

10. Beschichtungssystem, umfassend:
(a) eine Sol-Gel-Beschichtung der Zusammensetzung nach Anspruch 5; und
(b) eine Primer-Harzschicht, die Acetoacetat- und Acrylatfunktionalitäten aufweist.

11. Beschichtungssystem nach Anspruch 10, ferner umfassend eine Urethan-Deckschicht.

## Revendications

1. Composition de sol-gel hybride zirconium-silice stable, la composition comprenant :
(a) au moins un composé zirconium de la formule générale :
Zr(OC(O)R)4
dans laquelle R représente un groupe alkyle de 1 à 6 atomes de carbone ; et
(b) un gel de silice inorganique hydraté ayant une taille de particules inférieure à 50 nm.

2. Composition de sol-gel selon la revendication 1, comprenant en outre de la 2,4-pentanedione.

3. Composition de sol-gel en deux parties, comprenant :
(a) une première partie comprenant au moins un composé zirconium de la formule générale :
Zr(OC(O)R)4
dans laquelle R représente un groupe alkyle de 1 à 6 atomes de carbone ; et un gel de silice hydraté ayant une taille de particules inférieure à 50 nm ; et
(b) une seconde partie comprenant un composé organosilane ayant la formule générale : SiXa(OR)4-a dans laquelle R représente un groupe alkyle de 1 à 6 atomes de carbone, X représente un groupe alkylglycidoxy et a représente un entier de 1 à 3.

4. Composition de sol-gel en deux parties selon la revendication 3, dans laquelle la première partie comprend en outre de la 2,4-pentanedione.

5. Composition de revêtement comprenant :
(a) la composition de sol-gel selon la revendication 3 ou 4 ; et
(b) au moins un composé silyle ayant la formule générale :
SiXa(OR)4-a
dans laquelle R représente un groupe alkyle de 1 à 6 atomes de carbone, X représente un groupe alkylamine et a représente un entier de 1 à 3.

6. Composition de revêtement selon la revendication 5, dans laquelle le composé silyle est un aminosilane.

7. Composition de revêtement selon la revendication 5, dans laquelle le composé silyle est une bis-silylamine.

8. Système de revêtement comprenant :
(a) un revêtement de sol-gel de la composition selon la revendication 5 ; et
(b) une couche de résine d'apprêt par-dessus la composition de sol-gel ayant des fonctionnalités époxy et amine.

9. Système de revêtement selon la revendication 8, comprenant en outre une couche supérieure d'uréthane par-dessus la couche de résine d'apprêt.

10. Système de revêtement comprenant :
(a) un revêtement de sol-gel de la composition selon la revendication 5 ; et
(b) une couche de résine d'apprêt ayant des fonctionnalités acétoacétate et acrylate.

11. Système de revêtement selon la revendication 10, comprenant en outre une couche supérieure d'uréthane.
